# EUROPEAN PATENT APPLICATION

(11) **EP 3 747 273 A1**
(43) Date of publication of application: **09.12.2020**
(21) Application number: 19178543.5
(22) Date of filing: 05.06.2019
(51) Int. Cl.: A23F 5/26

(54) **PROCESS FOR COLD BREWING COFFEE AND BEVERAGE OBTAINED THEREOF**

(71) Applicant: Beyers' Koffie nv, 2870 Puurs (BE)
(72) Inventor: Ciaramelli, Marco, 2870 Puurs (BE); Van Helleputte, Bart, 2870 Puurs (BE); Neyt, Caroline, 2870 Puurs (BE)
(74) Representative: Brantsandpatents bvba

(57) **Abstract**

The current invention concerns a process for cold brewing of coffee comprising the steps of: (i) providing of a quantity of coffee bean material of a certain temperature range and grinding said coffee material to certain particle size, optionally in conjunction with a solvent; (ii) infusing of said quantity of roasted ground coffee bean material to a quantity of a solvent in a vessel for a first duration of time to form a blend, (iii) cold extraction step in said vessel for a second duration of time to form a beverage extract, whereby said extract is optionally agitated for a third duration of time; (iv) separating of the extracted coffee bean material from the beverage extract to form a clarified coffee extract (ii); (v) optional standardization of said clarified coffee extract by adding or removing the solvent; (vi) preserving the clarified coffee extract by an antimicrobial treatment, (vii) optional removing said clarified coffee extract from the vessel, and characterized in that infusing (ii) and cold extraction step (iii) must take place at a temperature below 45 °C and the total dissolved coffee solids before concentration or adding soluble components to the clarified coffee extract (TDS%) of a dissolved coffee bean material to the solvent is higher than 0.14 wt.% and lower than 75 wt.%. In a second aspect, the present invention relates to a coffee beverage of total dissolved solids content of not less than 0.5 wt.%, obtainable by the process of the invention.

## Description

### Technical field

The invention pertains to the technical field of beverage brewing systems and, more specifically, improved cold brew beverage brewing systems for producing soluble beverage (e.g. coffee). In particular, the processes disclosed herein allow for efficient, rapid, industrial scale production of cold brewed coffee beverages having altered or improved nutritional and taste characteristics, high total dissolved solids content, lower acidity, improved flavor stability and longer shelf-life.

### Background

Brewed beverages, such as coffee or tea, are very popular and common among consumers in various cultures and in many countries around the world. Getting the best quality brew and achieving the best taste in the most efficient manner has been the goal of many coffee and tea brewers for many years. The cold brewing trend has become more mainstream over the past couple of years compared to the traditional hot brewing process.

In general, cold brew processes involve brewing ground coffee beans over a period of time at close to ambient or colder water. Traditionally cold brew coffee processes take place in smaller vessels in a batch by batch process and result in a coffee beverage of different chemical composition and varying organoleptic properties, as well as relatively low total solids content. Still, the resulting cold brewed coffee beverage has characteristics that may be considered more desirable when compared to the traditional hot brewing process. For example, a cold brewed coffee is generally found to be less acidic by consumers, higher in caffeine content, and has a smoother taste. Traditionally prepared hot brewed coffee, on the other hand, is generally found to have a more acidic taste and can cause by the lower pH heartburn symptoms, and associated discomfort for consumers. The process of making such coffee beverage are characterized by multi-step process defined by granulometry, extraction, brewing agitation, time, temperature and separation, typically followed by a multi-step or combined sterilization process. Thus, the cost of such preparation processes is unreasonably high.

US2019053511 discloses a cold brew process for preparing a beverage which includes a multi-step extraction process and/or multi-vessel extraction followed by pumping steps in order to collect the extracts and optimize the extraction of coffee bean material.

WO2014175610 discloses an extractor for producing a cold brew ("Dutch") coffee using cold water. In a method disclosed in WO '610 a large-capacity, low-temperature permeable liquid coffee extractor is used in a liquid coffee extracting method, enabling a coffee liquid to be extracted while uniformly passing cool water even in a coffee powder stored in a large-capacity extractor.

WO2019086472 discloses an apparatus for brewing infusion, said infusion being hold in a filtering package, wherein said apparatus comprises a brew container configured for holding water and a filtering packet of infusion material, a basket configured for holding the filtering packet and configured for being hold in the brew container, and an actuator to rotate the basket on itself inside the brew container around the central axis, wherein the basked comprises blades, said blades being configured to generate an axial flow of water through the basket, when the basket is rotated within the brew container filled with water.

US 3,582,351 describes a method of brewing coffee in which freshly ground coffee is infused with hot water in a coffee extractor to produce "strong coffee" which is not palatable. The "strong coffee" is then expelled from the extractor by application of a gas, such as carbon dioxide, and directed to a carbonator where it is carbonated, stored under pressure and finally dispensed through a mixing value in admixture with hot water to make the "strong coffee" consumable.

WO2013019676 is directed to instant coffee and methods of preparing the same, wherein the methods include adding water having a temperature of less than 117 °F to ground coffee beans to result in a slurry with liquid and solid components, maintaining the slurry at a temperature below 117 °F for at least one hour, separating the liquid component of the slurry from the solid component, to yield a liquid coffee extract, and subjecting the liquid coffee extract to a drying process to remove water from the liquid coffee extract, to yield a solid coffee extract which can be used as an instant coffee.

US2016270587 discloses a methods and apparatus for dynamic cold brew of flavor materials such as tea and coffee in which the flavor materials are exposed for a short time to turbulent flow water.

EP 3 420 825 relates to a method for preservation and a process for the preparation of a beverage concentrate and a beverage based on cold infusions of tea and / or coffee. The preservation was achieved by adding sugar and / or lowering the pH by adding acid, in particular carbonation of the obtained cold brewed beverage.

WO2018075446 discloses a method and system for vacuum extraction of brewed beverages is described. The process includes the steps of preparing a liquid water or solvent to a desired temperature, combining the liquid water or solvent with a first brewing material in a brewing vessel, removing air from the brewing vessel until a first desired pressure set point is reached, steeping the mixture of the liquid water or solvent and the first brewing material in the brewing vessel for a desired low-pressure steeping time, adding a filler gas to the brewing vessel until a second desired pressure set point is reached, steeping the mixture of the liquid water or solvent and the first brewing material in the brewing vessel for a desired steeping time at atmospheric or high-pressure and directing the liquid water or solvent and the first brewing material through a filtration system to yield a filtered brewed beverage.

Prior art processes known to the applicants produces cold brew beverage compositions that have relatively low yield solid content levels when compared to the coffee spend and that lack qualities required for successful use in small volume containers or in unrefrigerated environments. Typical current methods for producing large quantities of extracts from solid raw materials such as ground, roasted coffee are designed for exhaustive extraction which includes multiple extraction steps, long extraction times and often high temperature. Such methods are not ideally suited to producing high quality coffee extracts that are rich in flavor and fragrance, and which maintain the varietal characteristics of the roasted coffee from which they are produced. Prior art known to the applicants also fails to disclose any process suited for an industrial scale production of cold brew compositions which are of high total dissolved solids content, pleasant aroma, and satisfying microbial quality standards. Moreover, the prior art lacks an improved process which would allow the use of another suitable solvents, such as milk, milk substitutes or the like derivatives to obtain an cold beverage of satisfying quality and enriched in phytochemical nutrients. There is a long felt need for improved processes with less extraction steps, shorter extraction, whereby said process yields an improved cold brewed coffee beverage of an improved total solid content, improved flavor stability and longer shelf life. There remains a need for a process for cold brewing of coffee, optimized to achieve the most efficient extraction of phytonutrient and aroma constituents of coffee beans in shortest possible time.

The present invention aims to resolve at least some of the problems mentioned above.

### Summary of the invention

The present invention provides a process for cold brewing of coffee comprising the steps of:
(i) providing of a quantity of coffee bean material of a certain temperature range and grinding said coffee material to certain particle size, optionally in conjunction with a solvent;
(ii) infusing of said quantity of roasted ground coffee bean material to a quantity of a solvent in a vessel for a first duration of time to form a blend,
(iii) cold extraction step in said vessel for a second duration of time to form a beverage extract, whereby said extract is optionally agitated for a third duration of time;
(iv) separating of the extracted coffee bean material from the beverage extract to form a clarified coffee extract (ii);
(v) optional standardization of said clarified coffee extract by adding or removing the solvent;
(vi) preserving the clarified coffee extract by an antimicrobial treatment,
(vii) optional removing said clarified coffee extract from the vessel, and
   characterized in that infusing (ii) and cold extraction step (iii) must take place at a temperature below 45 °C and the total dissolved coffee solids before concentration or adding soluble components to the clarified coffee extract (TDS%) of a dissolved coffee bean material to the solvent is higher than 0.14 wt.% and lower than 75 wt.%.

The process according to an embodiment of the invention is particularly suitable for industrial applications aiming to obtain the efficient, simpler and cheaper process for preparation of a cold brewed coffee beverage. Said process is characterized by shorter extraction time, steps which involve relative simple technology so the cost is low, efficient filtration to avoid losses of the obtained coffee beverage in the residual ground coffee material. The process of the invention discloses optional standardization step, whereby a concentrated coffee beverage characterized by a high total dissolved solids content is obtained without excessive heating or a high temperature. The process allows obtaining the optimized cold brewed coffee beverage in an efficient and cheap process. The process of the invention is easily coupled to processes such as roasting/grinding of coffee beans or insertion/purging of a flow gas in order to enhance the extraction process and/or to improve the coffee beverage stability.

The process according to the present invention is particularly suitable for production pf phytonutrient rich coffee beverage with a high yield total dissolved solids content and a reduced acidity. The process is optimized to obtain a beverage characterized by a preserved, unique flavor of coffee beans. The process of invention is relatively simple and cheaper than known methods and does not require long extraction time and/or severe extraction conditions.

In a second aspect, the present invention provides a cold brewed coffee beverage obtainable by the process of the invention, said beverage being characterized by a total dissolved solids content of not less than 0.5 wt.%.

The term "total dissolved solids" abbreviated "TDS", as used herein, is a measure of the dissolved combined content of all inorganic and organic substances present in an obtained beverage in molecular, ionized or micro-granular (colloidal sol) suspended form. Generally the operational definition is that the solids must be small enough to survive filtration through a filter with two-micrometer (nominal size, or smaller) pores. Total dissolved solids are used as an indicator of the efficacy of the process for cold brewing of coffee of the present invention.

The cold brewed coffee beverage of the invention is of improved nutritional and aroma properties, reduced acidity, suitable to be mixed with other consumables such as milk, milk substitutes or derivatives thereof, teas and juices, and of a satisfying microbiological quality.

The cold brewed coffee beverage of the invention is surprisingly characterized by a high yield total dissolved solids content, low acidity and a high content of nutritional and aroma constituents. Moreover, said beverage is of a unique flavor of coffee beans and it is suitable for direct consumption. The cold brewed coffee beverage of the invention is of a satisfying aroma and shelf life stability, and, due to a lower acidity than traditionally brewed coffee beverages, it is suitable for wider population of consumers.

### Description of figures

**Figure 1** shows the effect of extraction time on pH value of the coffee beverage of the invention.
**Figure 2** shows the effect of the extraction time on TDS content in the coffee beverage of the invention.
**Figure 3** the effect of stirring on pH value of coffee beverage of the invention.
**Figure 4** the effect of stirring on the extraction process (% of extraction) in the coffee beverage of the invention.
**Figure 5** shows caffeine content in cold brewed coffee beverage of the invention.

### Detailed description of the invention

The present invention concerns a process for cold brewing of coffee, which is particularly suitable for industrial applications aiming to obtain the efficient, simpler and cheaper process for preparation of a cold brewed coffee beverage, characterized by a high total dissolved solids content, low acidity and a high content of nutritional constituents and an unique flavor of the bean.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

In a first aspect, the invention provides a process for cold brewing of coffee comprising the steps of:
(i) providing of a quantity of coffee bean material of a certain temperature range and grinding said coffee material to certain particle size, optionally in conjunction with a solvent;
(ii) infusing of said quantity of roasted ground coffee bean material to a quantity of a solvent in a vessel for a first duration of time to form a blend,
(iii) cold extraction step in said vessel for a second duration of time to form a beverage extract, whereby said extract is optionally agitated for a third duration of time;
(iv) separating of the extracted coffee bean material from the beverage extract to form a clarified coffee extract (ii);
(v) optional standardization of said clarified coffee extract by adding or removing the solvent;
(vi) preserving the clarified coffee extract by an antimicrobial treatment,
(vii) optional removing said clarified coffee extract from the vessel, and
   **characterized in that** infusing (ii) and cold extraction step (iii) must take place at a temperature below 45 °C and the total dissolved coffee solids before concentration or adding soluble components to the clarified coffee extract (TDS%) of a dissolved coffee bean material to the solvent is higher than 0.14 wt.% and lower than 75 wt.%.

Any suitable apparatus that is compatible with a cold brewing process of the invention can be employed. The apparatus includes one or more extraction tanks, vessels or containers, such as but not limited to, large stainless steel tanks, to process a large quantities of ground coffee simmered and segregated in the tank. In another embodiment, the ground coffee to be subjected to a cold brewing process of the invention is divided in a filter, sieve, bag, pouch or any other suitable porous material. Said division of the ground coffee allows for a better yield/control of extraction process and shorten or even completely replaces the filtering of the cold brewed beverage obtained thereof. The division of the ground coffee allows for easier antimicrobial treatment, which is essential for obtaining a cold brewed beverage which is ready for the consumption. The disclosed process allows for large scale manufacturing of cold brewed coffee beverage using the benefits of small batch processing. The disclosed brewing process can provide a ready-to-drink coffee or a concentrate product that may vary in the Brix levels. "Brix" as used herein, is a measure in degrees of the amount of dissolved solids in a liquid. The process of the invention allows for obtaining a beverage which is less acidic, more shelf stable, i.e., a beverage that retains a minimum pH from the time of packaging to the time of consumption, or a concentrate having a pH of 5.0 to 7.0, than the traditionally produced coffee.

The disclosed process enables using cold brewing methods to obtain a clarified coffee extract characterized by the total dissolved coffee solids content before concentration or adding soluble components to said clarified coffee extract (TDS%) of a dissolved coffee bean material to the solvent is higher than 0.14 wt.% and lower than 75 wt.%. In a preferred embodiment, said total yield of dissolved solids content is at least 10 wt%, preferably at least 15 wt%, most preferably at least 18 wt.%, and at most 35 wt.%, preferably at most 30 wt.%, most preferably at most 20 wt.%. In a preferred embodiment, said cold brewed coffee beverage has a total dissolved solids content of 18 wt.%, 19 wt.% or 20 wt.% or any value in between.

The use of room and below room temperatures in the process of the invention decreases the possible phytonutrient degradation. Thus clarified coffee extract of the invention is more phytonutrient rich and healthier than traditionally produced coffee. Moreover, the mild extraction conditions and relatively low extraction times preserve an unique coffee aroma present in the roasted beans. The process of the invention is suitable for any type of roasted coffee beans, regardless of the characteristics of the roasting process. Thus, process of the invention allows fine adjustments and profiling of an aroma of the clarified coffee extract based on the aroma of the roasted beans, and adjusting the aroma to a consumer's needs.

In one embodiment, an extraction is performed in an extraction tank. The extraction tank body may be single walled or a double walled steel, of a volume which are optionally adjusted to the volume of the ground coffee bean material to be extracted. The height of the tank body may be such that it facilitates personnel to load or unload the coffee bean material either in filter containers or by simple simmering into an extraction solvent in the tank body without an external platform. The tank body preferably holds at least about 100 to about 6000 gallons of liquid or greater. Although in one embodiment, the tank has a rectangular shape it may be apparent to one skilled in the art that any vessel of suitable size and shape may be used for the disclosed cold brewing process. In the preferred embodiment, the tank is of a cylindrical shape. It should be apparent to one skilled in the art that any suitable design of the tank body that facilitates easy drainage of the coffee beverage from the tank body may be used.

In one embodiment, the top opening of the tank body may be covered with a lid. The lid may be pivotably attached to the tank body through known means in the art, such as, but not limited to a hinged mechanism. Although the tank lid in this embodiment is hinged to the short side of the tank body, it may be apparent to one skilled in the art that other configurations, such as but not limited to a single lid or double lids capable of sliding over the tank body may also be used.

In a preferred embodiment, the lid has the lockable surface which is capable of being locked together when the lid of the tank is closed. This configuration allows the lid to stay locked during a extraction or any other operation during the process of the invention and prevent external contaminating liquid to enter the tank.

In another embodiment, the extraction tank may also include a permanently suspended perforated flat plate or a false bottom disposed above the inner surface of the bottom panel of the tank body. The false bottom may be positioned in such a way that there is at least half to one-inch gap between the false bottom and the center portion of the bottom panel of the tank body. During an extraction step the false bottom serves to hold the coffee filter container. While the false bottom may be permanently attached in this embodiment, it may be apparent to a skilled person that it can also exist as a removable and/or a disposable part of the extraction tank body.

In one embodiment, a quantity of coffee beans is ground to a certain particle size and transferred to the extraction tank. In a preferred embodiment, a quantity of ground material is ground in conjunction with a solvent.

The process of the present invention is suitable for brewing all types of roasted coffee beans including light, medium, medium-to-dark, or dark roast but preferably 'medium-to-dark' or 'dark' roast. The degree of the roast can be varied to produce a coffee extract having a desired strength and flavor. Various techniques and methods are known to those in the art for roasting coffee beans, including variable roasting temperatures, times, and methodologies. In the context of the present application, any type of roasted coffee beans can be utilized. Although many roasters may have specialized names for their favored roasts, due to a lack of industry standardization the roasts are generally defined based on the duration of the roast. So a lighter roast may be beans obtained after roasting the beans for a shorter duration, while the medium or dark roasts may be obtained by roasting the beans for an increasing amount of time. The roasts however may generally be identified by their appearance and taste as outlined by the National Coffee Association (NCA). For example, of the traditional three roasts the 'lighter roast' coffee possess a light brown color and has no oil on the surface of the beans compared to the slightly darker brown colored 'medium roast' or the dark to almost black 'dark roast' coffee where oils can be seen on the surface of the coffee beans. In one embodiment of the present invention raw coffee beans are used.

In some embodiments, the coffee beans are ground within or close in proximity to the facility in which the cold-brewing process will be conducted. In some embodiments, the coffee beans are ground immediately prior to the cold-brewing process. In some embodiments, the coffee beans are ground within one hour or less of the cold-brewing process. In some embodiments, the coffee beans are ground within one day or less of the cold-brewing process. In some embodiments, the coffee beans are ground within one week or less of the cold-brewing process. In some embodiments, the coffee beans are ground within one month or less of the cold-brewing process. In some embodiments, the coffee beans are ground over one month prior to the cold-brewing process. In one embodiment, the roasting process is coupled to the process for cold brewing of the present invention. In the process of the invention, light roasted, medium, medium-dark or dark roasted coffee beans are used. The term "coupled" as used herein, means that the process for cold brewing of coffee takes place not longer than 24 h upon completion of roasting and grinding of coffee material, preferably not longer than 12 h upon completion of roasting and grinding of coffee material, most preferably not longer than 8 h upon completion of roasting and grinding of coffee material. Roasted and ground coffee beans are at temperature ranging from at least 0 °C, preferably at least 5 °C, most preferably at least 10 °C, and at most 90 °C, preferably at most 80 °C most preferably at most 75 °C, at the moment of subjecting said ground coffee beans to a process of the invention.

In a preferred embodiment of the process of the invention, said step i) of providing of a quantity of roasted ground coffee bean material is performed with roasted ground coffee material of a temperature not less than 5°C and not more than 85°C. In a most preferred embodiment, step of providing of a quantity of roasted ground coffee bean material is performed with roasted ground coffee material of a temperature of about 20°C.

In one embodiment, coffee beans used in the process of the invention are light roasted beans. Said light roasted beans are roasted at temperatures of about at least 180°C to about at most 205°C. At or around 205°C, the beans pop or crack and expand in size. This is known as the "first crack". So a light roast generally means a coffee that has not been roasted beyond the first crack. Light brown in color, with a light body and no oil on the surface of the beans. Light roasts have a toasted grain taste and pronounced acidity. The origin flavors of the bean are retained to a greater extent than in darker roasted coffees.

In another embodiment, coffee beans used in the process of the invention are medium roasted beans. Said medium roasted coffee beans are roasted at temperatures of about at least 210 °C and at most about 220 °C, or between the end of a first crack and just before second crack. Medium roasted coffees are medium brown in color with more body than light roasts. Like the lighter roasted coffee grains, they have no oil on the bean surfaces. However, medium roasts lack the grainy taste of the light roasts, exhibiting more balanced flavor, aroma, and acidity.

In another embodiment, coffee beans used in the process of the invention are medium-dark roasted beans. Said medium-dark roasted coffee beans are roasted at temperatures of about at least 225 °C and at most about 230 °C, i.e. beans that are roasted to the beginning or middle of the second crack. The flavors and aromas of the roasting process become noticeable, and the taste of the coffee may be somewhat spicy. Medium-dark roasts have a richer, darker color with some oil beginning to show on the surface of the beans. A medium-dark roast has a heavy body in comparison with the lighter or medium roasts.

In another embodiment, coffee beans used in the process of the invention are dark roasted beans. Said dark roasted coffee beans are roasted at temperatures of about 240 °C and to the end of second crack or beyond. The dark coffee roasted beans are seldom roasted to a temperature exceeding 250 °C, at which point the body of the beans is thin and the taste is characterized by flavors of tar and charcoal. Dark roasted coffees are dark brown in color, like chocolate, or sometimes almost black. They have a sheen of oil on the surface, which is usually evident in the cup when the dark roast coffee is brewed. The coffee's origin flavors are eclipsed by the flavors of the roasting process. The coffee will generally have a bitter and smoky or even burnt taste.

In some embodiments, the roasted or raw coffee beans are ground into "coffee grounds" prior to cold-brewing. In some embodiments, the coffee grounds are ground into a mixture of uniform or non-uniform size. In some embodiments, the coffee beans are very coarsely ground. In some embodiments, the coffee beans are coarsely ground. In some embodiments, the coffee beans are intermediately ground. In some embodiments, the coffee beans are finely ground. In some embodiments, the coffee beans are very finely ground. In some embodiments, the roasted or raw coffee beans are ground together with the solvent to create an agitated pre-infusion prior to cold-brewing.

As is known to those skilled in the art, the degree of the grind can be varied to produce a coffee beverage having a desired strength and flavor, and different styles of coffee have different preferred or optimal grinds. The three most common grind types are fine, medium, and coarse. Coarsely ground coffee is generally used for various coffee brewing techniques and is commonly used for the press pot, or French press. Medium ground coffee is generally used in drip coffee makers, though the particle size of the medium grind can be varied. A finer grind more easily releases the coffee components, resulting in greater flavor, but can potentially increase the acidity or produce more bitter or off flavors. In a preferred embodiment, coffee beans used in a process for cold brewing of coffee of the invention are ground to a particle size of at least 150 µm, preferably at least 300 µm, preferably at 400 µm, and at most 800 µm, preferably at most 700 µm, most preferably at most 600 µm, as determined by as determined by ISO 13320:2009. In a most preferred embodiment, said coffee beans are ground to a particle size of at least about 400 µm to at most 600 µm, as determined by as determined by ISO 13320:2009.

Various techniques and methods are known to those in the art for grinding coffee beans. In the context of the present invention, any method for grinding roasted or unroasted coffee beans can be utilized. In the context of the present application, any type of grind, yielding any size of ground coffee, can be utilized.

The process of the invention comprises a step of infusing of said quantity of roasted ground coffee bean material to a quantity of a solvent in a vessel for a first duration of time to form a blend. In the preferred embodiment, said quantity of ground coffee material is immersed into the said quantity of a solvent. The first duration of time is not shorter than 1 min, preferably not shorter than 1h, not longer than 24h, preferably not longer than 12 h, more preferably not longer than 8 h. In the preferred embodiment, the step of infusing of said quantity of roasted ground coffee bean material to the solvent of the process of the present invention is carried out for not shorter than 4 h and not longer than 8 h. In one embodiment, said extraction step is performed for about 8 h.

The process for cold brewing comprises the cold extraction step, wherein the cold extraction takes place for not shorter than 1h, preferably not shorter than 4h and not longer than 24 h, preferably not longer than 20 h. In a preferred embodiment said extraction is performed for about 16 h to about 20 h. The extraction time may also be determined until a Brix level of about 15 or about 12 or about 10 or about 5 or about 1 is achieved or may be determined by the user depending on the roast and/or the amount of the solid material, or the amount of coffee bean material.

In one embodiment, once the tank body is filled with the solvent and the coffee is immersed, the cold step extraction of the blend starts by closing the valve in pipe of the extraction tank so to allow the blend to be stirred within the extraction tank. The agitating is performed for a third duration of time, whereby said third duration of time is not shorter than 1 min, preferably not shorter than 1 h, most preferably not shorter than 8 h. In a preferred embodiment, agitating process may occur during an entire extraction time. In another embodiment, stirring can be set to be performed in at least one interval during the extraction. The circulation of water is ensured by any kind of agitating device, such as, but not limited to, a magnetic stirring device, sonic vibration stirring device, agitating by a circulation, ultrasonic agitation device and the like.

In a preferred embodiment, a blend containing the ground coffee bean material with cold water is disposed in a tank. After allowing the materials to absorb water and expand for a short period of time, the water is caused to rapidly circulate in a turbulent pattern that keeps the coffee grounds separated from each other and dispersed throughout the water. This provides for the surfaces of essentially all coffee grounds of the blend to be exposed to the water by preventing said grounds to accumulate at the bottom of the tank or cling together (which would prevent some leaf or grounds surfaces from being exposed). The turbulent pattern further creates relative movement between the circulating water and the coffee grounds such that the water washes over the coffee grounds (as opposed to simply moving with the water) to rapidly extract and dissolve the soluble flavor and nutrient components into the water. In a further preferred embodiment, the extraction tank is equipped with a stirring device such as, but not limited to a turbine or a propeller which rotates at high speed to produce a turbulent flow in the water that not only circulates water rotationally but also produces a thrust upward. The upward thrust of the water's turbulent flow prevents the flavor materials from falling and settling to the bottom of the extraction tank and generally distributes them throughout the water for as long as the blades are rotated at a selected speed. In a particularly preferred embodiment, turbulent flow is caused by ultrasonic shockwaves.

Any rotation speed used to one skilled in the art can be implemented without departing from the scope of the invention. In a preferred embodiment, for minimizing the time to complete the process of extracting a flavorful brew, the propeller is rotated at least 500 rpm, preferably between 1000 and 3000 rpm. In another embodiment, rotations as low as 700 rpm will produce a cold brewed coffee beverage, but will take longer.

In a particularly preferred embodiment, the water is caused into turbulent flow characterized by both a circular flow and a longitudinal flow that has an upward thrusting component. In addition to rotation speed of the propeller, the turbulent flow that has the flavor material flowing both circularly and longitudinally causes the water and flavor materials to circulate in opposition to each other which accelerates the transfer of the flavor and nutrient components from the flavor materials into the water. Thus, the maximal extraction occurs at a low temperature during a short period of time.

In another embodiment, the process for cold brewing of coffee requires placing of said quantity of ground coffee material a filter container prior to immersion into the said quantity of a solvent. In the preferred embodiment, process comprises the steps of: providing at least one filter container such as, but not limited to a perforated cartridge, bag or pouch, and adding the roasted and ground coffee to the at least one filter container, and subjecting the at least one filter contained of coffee material to extraction process. The filter unit may be any traditional tea or coffee bags, pouches, packets, sachets, packages and may be made from a porous non-woven fabric, woven fabric, or one or more sheets of filter paper, or food grade plastic or nylon, or perforated metal or made of any known material with filtering qualities. The filter unit may exist in any suitable shape including but not limited to a rectangle, circle or bottle shaped. The unit may have high wet strength and filtering qualities to prevent passage there-through of the coffee grounds. As in a typical tea or coffee filter unit, the infusion material may be sealed within the unit by any known means in the art such as but not limited to drawstring with sewn seam to tie the bags to any pipe or hose or rod. In one embodiment, the stirring of the extraction mixture may be applied to enhance the extraction process.

The extraction process in general includes subjecting the blend comprising ground coffee bean material in a solvent to a cold extraction. The ground coffee beans may be a commercially available light, medium roast medium-dark or dark coffee roast or any combination thereof. Coffee beans may be selected from, but not limited to Latin-American, Southeast Asian, East-African coffee beans.

According to the process of the present invention, ground coffee beans or filter containers containing ground coffee beans may be immersed or flooded with the solvent, or optionally, said coffee beans be pre-soaked in or sprayed with the solvent to ensure the material is sufficiently wet before loading into the extraction tank. In a particularly preferred embodiment, said coffee beans are ground in conjunction with a solvent.

In a preferred embodiment, the solvent used in the process of the invention is water. In a further preferred embodiment, the water used is filtered tap water or water purified by any means known in the prior art. One skilled in the art would also understand that purification of water may be accomplished by any known means in the art including, but not limited to, reverse osmosis. The purified water in general aids to clean out any contaminates larger than water molecules that may interfere with product quality such as taste, harmful impurities such as lead, arsenic nitrates, sodium, and bacteria that can be present in tap water.

In another embodiment various mixtures of water with milk, milk alternatives or any derivatives thereof, can be used without departing from the scope of the invention. Some non-limiting examples are whole milk, low-fat milk, fat free milk, organic milk, lactose free milk, flavored milk, raw milk, coconut milk, almond milk, goat's milk, oat milk, soy milk, rice milk and the like. In another embodiment, a tea or juice are used in said solvent mixtures. Said tea can be any commercially available black, green, white or fruit tea or tisane, or the like. Said juice may be any commercially available fruit or vegetable juice.

In one embodiment, the cold extraction step of the process for cold brewing of coffee is performed at the extraction temperature of at least 0°C and at most 50°C, preferably at least 5 °C and at most 25 °C. In a particularly preferred embodiment, the temperature of extraction is not less than 5 °C and not more than 10 °C, i.e. temperature of solvent is set to 6 °C, 7°C, 8°C, 9°C or any value in between.

The weight ratio (wt.%) of used amount of roasted ground coffee bean material to the solvent in the extraction tank is not higher than 1 part of coffee beans : 3 parts of solvent (i.e. 1:3), and not lower than 1 part of coffee beans : 100 parts of solvent (i.e. 1:100). In a preferred embodiment, said ratio (wt.%) of said coffee bean material to said solvent is not higher than 1:5 and not lower then 1:20. In a further preferred embodiment, said ratio (wt.%) of said coffee bean material to said solvent is 1:6, 1:7, 1:8, 1:9, 1:10, 1:11, 1:12, 1:13, 1:14, 1:15, 1:16, 1:17, 1:18, 1:19 or any value in-between.

The process of the present invention comprises the step of separating of the etracted coffee bean material from said beverage extract obtained in the cold extraction step to obtain clarified coffee extract. In a preferred embodiment, said beverage extract is filtered through any coffee filter and/or basket preferably capable of rotating and/or oscillating and under vacuum to enhance the separation of clarified coffee extract and remaining ground coffee bean material. It should be understood by a skilled person that any suitable filter device/basket comprising primary components such as but not limited to a filter basket body, a fixed or sliding-drawer style basket retainer that carries the basket, suitable filter and a user operated mechanical arrangement, such as a rotating selection dial and the associated mechanical components. Said filter material used can be any sort of porous non-woven fabric, woven fabric, one or more sheets of filter paper, or food grade plastic with filtering qualities, a porous non-woven fabric, woven fabric, one or more sheets of filter paper, or food grade plastic with filtering qualities, and the like. In another embodiment, the said filter is a sort of metal sieve such as stainless steel sieve, and the like.

The clarified coffee extract after the cold extraction step may typically have a pH from about 4.5 and about 5.5, and a Brix level of about 0.5 to about 50.

In one embodiment of the invention, after completion of the cold extraction step obtained clarified coffee extract may be processed with processing aids, such as but not limited to buffers for pH adjustment, sugars, enzymes for alleviating the sediment formation, pleated filter system to filter out the particulates, sediments, etc. Alternatively, the obtained coffee beverage may also be subjected to additional processes in the same tank at room or below room temperature not exceeding 45 °C or it may be frozen until further processing, such as but not limited to UHT treatment, freeze shock treatment, carbonation and packaging.

After filtering, the clarified coffee extract may be pumped through outlet and collected in another processing tank, or may be subjected to additional processing in the collection tank to obtain a cold brewed coffee beverage of the invention.

In one embodiment, of the invention, a series of tanks is used for a large scale cold brewing operation described in this disclosure. The series of tanks may all be of the same size and capacity, or in another embodiment may differ in size and volume. The series tanks may be interconnected by a pipe system that includes valves, or any known methods to enable regulation of liquid flow between the tanks. The circulation of liquid within a tank body or between series of tanks is generally powered by a motor assembly, or by any other suitable method, as known in the prior art.

In another embodiment, the clarified coffee extract is collected into a nitrogen blanketed tank. The supply of a nitrogen or any other suitable inert atmosphere is regulated by any known process in the art, without departing from the scope of the invention. This step allows to obtain the cold brewed coffee beverage which is more stable if free from contact with air or oxygen. Thus, in a preferred embodiment, the clarified coffee extract is subjected to an inert gas atmosphere, preferably nitrogen atmosphere, up to the limit of saturation. Nitrogen atmosphere is particularly preferred according to the present invention, because oxidation and taste-impairment of the obtained cold brewed coffee beverage is minimal, when being processed in a nitrogen atmosphere. In another embodiment, carbon dioxide or any other suitable inert gas may be used in the collection tank.

In another embodiment, into a clarified coffee extract of the invention nitrogen gas may be charged to obtain a nitrogen -charged cold brewed coffee beverage. A nitrogen tank containing nitrogen gas, is connected with a container which stores prepared cold brewed coffee beverage, by a line/pipe nitrogen gas is provided to a tank to form a nitrogen-charged coffee, a discharging unit being connected with the tank by a second line to be configured to discharge the nitrogen-charged coffee, and a first cooling unit covering the second line to be configured to cool the nitrogen-charged coffee.

In a process according to the first aspect of the invention, the obtained clarified coffee extract is preserved by an antimicrobial treatment. Said antimicrobial treatment may be UHT sterilization, filtration through a suitable filter, and/or sedimentation by a centrifuge, or the like processes.

In a preferred embodiment, the process of the invention includes the step of ultra-high temperature (UHT) treatment of the clarified coffee extract. This may be performed in tubular indirect exchangers where the clarified coffee extract is subjected to a temperature of about 35 °C to about 150 °C or higher for less than about 40 seconds, and preferably for less than about 20 seconds or less than about 10 seconds and more preferably for less than 3 seconds.

The process of the invention comprises an optional step of standardization the total dissolved solids content by adding or removing the solvent into the clarified coffee extract to obtain a cold brewed coffee beverage. The standardization process can occur via any of known processes capable of removing water from a coffee beverage. Some non-limiting examples are freeze drying, spray drying, centrifugation, vacuum drying, use of radiant heat, drying at ambient temperatures, application of infrared heat, evaporation, drum drying, dehydration, shelf drying, solar drying, and the like. In a preferred embodiment, the coffee beverage of the invention is concentrated by dehydration. For this purpose, a particularly gentle cold concentration method is used, such as, but not limited to a reverse osmosis. The dehydrated coffee brew concentrate or a preparation based thereon can be further diluted with water. In a particularly preferred embodiment, the excess solvent is removed using a cold or room temperature removing technique such as rotary evaporation, vacuum evaporation, reversed osmosis and the like.

The extraction process of the present invention aims to yield a cold brewed coffee beverage with a total dissolved solids content of not less than 0.5 wt.%, preferably not less than 10 wt.%, more preferably not less than 15 wt.%, and at most 35 wt.%, preferably at most 25 wt.%. In a particularly preferred embodiment, said total dissolved solids content is preferably between 10 wt.% and 20 wt.%. In another embodiment, if more pronounced and bitter aroma of said cold brewed coffee beverage is required, the content of the total dissolved solids should be raised to between 20 wt.% and 30 wt.%.

The cold brewed coffee beverage of the invention obtained by the process in the first aspect of the invention, is removed from a vessel and can be optionally packaged in a suitable beverage container, cartridge or the like. Some non-limiting examples of a volume fill capacity are 500ml, 330ml, 300ml 250ml, 200ml, 150 ml, 100 ml, 75 ml, 60 ml and 50 ml or any value in-between. It should be understood by a skilled person that a bigger bulk package can be distributed as a separate product, without departing from the scope of the present invention.

In a second aspect, the present invention relates to a cold brewed coffee beverage of total dissolved solids content of not less than 0.5 wt.%, obtainable by the process according to the first aspect of the invention. A cold brewed coffee of the invention is characterized by a total dissolved solids content of not less than 0.5 wt.%, preferably not less than 10wt.%, more preferably not less than 15 wt.%, and at most 35 wt.%, preferably at most 25 wt.%. In a particularly preferred embodiment, said total dissolved solids content is preferably between 10 wt% and 20 wt.%.

In a preferred embodiment, the cold brewed coffee beverage has a pH that does not drop below 5.0 and is shelf-stable for a period of at least 6 months.

A skilled person in the art may also appreciate the fact that unlike the traditional methods which increase the Brix levels by either adding solids to a coffee concentrate obtained by a cold or hot brewing process or combining extracts from cold brew and hot brew, the disclosed process is capable of providing a coffee concentrate of up to about 50 Brix, without any such additions.

In a preferred embodiment, cold brewed coffee beverage treated with one or more processing aids selected from the group comprising: addition of one or more agents to elevate pH, addition one or more sugars, addition of one or more enzymes to mitigate sediment formation, addition of one or more anti-foam materials, filtration to remove precipitates, ultra-high temperature treatment, shock freezing, carbonation of the beverage, or any combination thereof.

The cold brewed coffee beverage of the present invention is less acidic compared to a traditionally brewed hot coffee. So the beverage obtained after the process of the invention that is more alkaline may be ideal to extend the shelf life. In a preferred embodiment, cold brewed coffee beverage can comprise additional agents to elevate pH, such as, but not limited to milk and milk, milk alternatives or any product derived thereof.

In one embodiment, sugar is added to the cold brewed coffee beverage of the invention. The sugar used is in particular sucrose, in particular cane sugar, glucose, maltose, galactose, lactose, fructose, or the like.

According to the present invention, carbonation can generally be carried out by introducing carbon dioxide and / or by diluting the filtrate, beverage and / or beverage concentrate with carbonated liquid.

In another embodiment, in order to make the beverage more alkaline, said beverage is treated with processing aids such as with buffers, enzymes, anti-foam materials, etc. after the brewing process. The buffer or alkaline treatment may include addition of one or buffers such as, but not limited to, potassium carbonate, potassium hydroxide and tri-potassium phosphate to render the coffee beverage more alkaline. While the alkaline treatment of the beverage is generally performed after the extraction and filtration steps, a person skilled in the art would understand that the addition of buffer may occur at any step of the brewing process. In some other embodiments, the buffer may be added just before the cold extraction step. In another embodiment, the buffer may be added after the cold extraction step.

The buffer, such as potassium carbonate, may be added in an amount ranging from about 0.35% to about 0.45% or until the pH of the product before packaging is between about 5.0 to about 7.0, or preferably from about 5.5 to about 6.8 or more preferably from about 5.95 to about 6.2. In some embodiments the amount of buffer added to the beverage may depend on the kind of coffee roast.

The increase in the pH levels of the beverage may be achieved by simultaneously adding the buffer to the beverage and measuring the pH of the beverage using standard bench top pH meters at ambient temperature with liquid from the tank with no dilution or other treatment. In another embodiment, the pH of the beverage is constantly monitored as the buffer is added to the beverage in a tank. During this step, the beverage may be stirred in the tank. Since stirring may cause undesirable foaming anti-foaming materials may be added to the beverage before or after buffer treatment to prevent foaming. It is contemplated to add anti-foaming materials or defoamers as another processing aid such as, but not limited to, silicone antifoams to the coffee beverage before further processing. The amount of anti-foaming material added to the beverage generally does not exceed more than about 90 ppm. After addition of buffers and anti-foaming materials, the beverage may be transferred to a larger batching tank.

The process of this disclosure may also include the step of treatment the coffee concentrate with enzymes as a processing aid to prevent sediment formation. Accordingly, one or more enzymes including but not limited to pectinase, hemicellulase, cellulose, galactomannanase, endo-1-4-beta-Mannanase, alpha-galactosidase, pectin lyase, polygalacturonase, rohapect B1L and may be added at a range of about 0.5% to 3.0% w/v and v/v to the beverage to reduce sediment formation. The coffee beverage may be filtered before or after the alkaline and enzyme treatment. It may also be apparent to one skilled in the art that the filtration step may be optional, if the enzyme treatment reduces the formation of sediment in the concentrate to a desirably low or negligible level.

The UHT treatment of the coffee beverage of the invention may bring the pH of the beverage down by 0.1 to about 0.3, but the overall pH of the product may still be less acidic compared to the acidity of the beverage before the alkaline treatment. The presence of buffer added to the beverage also prevents further drop in the pH levels during this UHT treatment. It may be apparent to one skilled in the art that the concentrate before or after packaging may also be subjected to a standard retort sterilization process. Alternatively, the durability of the coffee beverage of the invention can be extended by shock freezing.

The coffee beverage after the UHT treatment step may then be directed to a holding tank and the concentrate may or may not be subjected to agitation at this stage. The overhead space of the tank may be filled with nitrogen flowing into the tank via pipes to prevent further oxidation of the final coffee beverage.

The resulting final coffee beverage or product that is buffer treated and has a pH from about 5.0 to about 7.0 or preferably from 5.95 to 6.8 may then be packaged in a beverage cartridge, or container, or bottles of any size. The container or cartridges or bottles may include glass, metal can, HDPE bottles, plastic cups or multi-layer cartons, etc. In one embodiment, the concentrate may be aseptically packaged in a beverage container, such as a K-cup, that may hold up to about 100 ml of liquid, or less. The final concentrate may also be packaged in multi-layer cartons or pods or bottles that may hold about up to about 75 ml, or up to about 60 ml of liquid.

The concentrate aseptically packaged in suitable cartridges may be shelf-stable (i.e., the concentrate has a stable pH of 5.0 or above, or the same pH achieved before packaging) and may additionally possess the characteristic smoothness of cold brew beverages with fresh flavor and may have a prolonged shelf life of more than 6 months but less than 24 months.

In a preferred embodiment, the cold brewed coffee beverage of the present invention is a "ready to-drink" product intended for a direct consumption.

In another embodiment the shelf-stable concentrate packaged in a suitable beverage cartridge may subsequently be mixed with various volumes of hot or cold liquid to form a ready-to-drink coffee beverage.

In another embodiment, the concentrate may also be packaged without an aseptic treatment and stored at cold temperature (at or below 7° C.) before it is mixed with hot or cold liquid to form a ready-to-drink beverage. It may be apparent to one skilled in the art that the beverage container may have a lid or cover that may be peeled off or punctured before the concentrate is mixed with a hot or cold liquid to form a ready-to-drink coffee beverage.

The process of invention is thus suitable for production of ready-to-drink as well as concentrated, "gourmet quality", cold brewed beverages for use a flavoring agents, beverage concentrates, and fragrances. The process of the invention reduces the extent of extraction of the roasted coffee and the level of bitter, off-flavor components present in the coffee extracts. The beverages produced according to the invention can be advantageously used for applications where high quality coffee extracts, with a relatively high concentration of soluble coffee solids are desired.

The invention is further described by the following non-limiting examples which further illustrate the invention, and are not intended to, nor should they be interpreted to, limit the scope of the invention.

### Examples

### Example 1: Preparation of cold brewed coffee in the process of the invention

### Ingredients:

### Filtered tap water

About 12 kg of Dessert coffee containing:
45 wt.% naturals: 25 wt.% santos3 (Latin-America) and 20 wt.% naturals2 (Latin-America-Southeast Asia)
55 wt. milds (light roasted (15 wt.% centrals (Latin America/ southeast Asia) 40 wt.% other milds (East-Africa/southeast Asia).

1 kg of said Dessert coffee blend is ground to an average particle size of 485 µm and transferred to a filter pouch and further processed in a process shown in example 2.

1 kg of said Dessert coffee blend is ground to an average particle size of 557 µm and used for a coffee beverage by a direct simmering shown in example 3.

### Example 2: A pouch immersion method

The CBS pouch is immersed in water at 7°C, at a ratio of 1 part coffee per 9 parts water. Water enters in the coffee particles and extracts the phytonutrients and aroma constituents from the coffee into the brew. At predetermined time points, pH and TDS (total dissolved solids) content are measured in the brew. Finally the brew is filtered by pouring out the brew from the extraction recipient, while the pouch remains in there.

### Example 3: Immersion of loose coffee

The loose coffee is immersed in water, at 7°C, at a ratio of 1 part coffee per 9 parts water. Finally the grounds are filtered out by means of a kitchen sieve for the coarsest particles, followed by finer filters for filtering out the fine particles. During the follow-up test, the pH and TDS content are measured in the brew, but unlike the pouch immersion this sometimes resulted in non-stable measurements due to the presence of many coffee particles in the brew.

Another batch of lose coffee was extracted with stirring applied
Same method as 'immersion of loose coffee', but with addition of stirring. A magnetic rod is placed in the recipient together with the ingredients and the recipient is placed on a magnetic stirring device, at 500 rpm. pH and TDS were measured in the brew of the follow-up sample, but here even more unstable results occurred due to a lot of very fine particles in the brew. This was also clear in the filtering step. The paper coffee filter was immediately blocked by all the fine particles.

### Measurements:

pH: pH is a measure for the acidity of the coffee. When extraction proceeds, the pH decreases, until a stable value is reached.

Extraction: the extraction% means how much percent of the coffee bean is extracted (this value is calculated based on the TDS content that is measured in the brew). This value must reach a value between 18 and 20% to have extracted all good flavors from the coffee. +/-20% of the coffee bean is well soluble and those solubles are rather good tasting. At an extraction between 20-30% the more bitter tasting solubles are extracted as well from the coffee bean.

### Example 4: Impact of extraction time on pH and TDS content

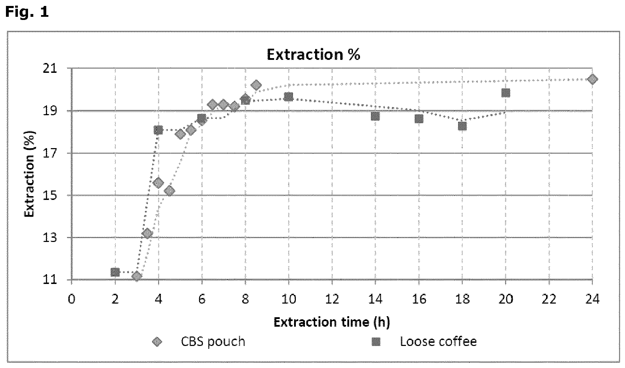

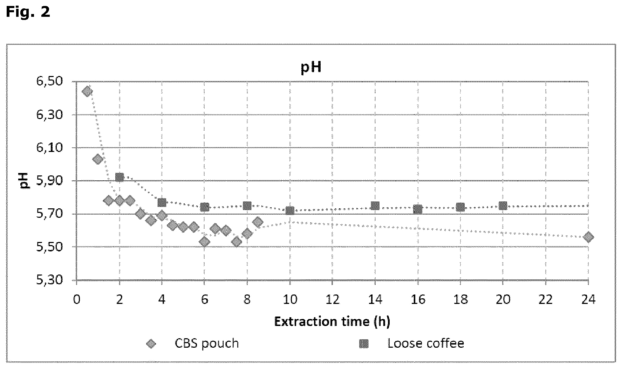

Results are shown in **Fig. 1** and **2** and short explanation is given below.

Effect of extraction time on pH value of the coffee beverage of the invention is shown in **Fig. 1****.** The pH value decreases fast when extraction proceeds, meaning that the acidic coffee solubles are easily extracted. For the loose coffee, the pH is stable after +/- 4h extraction time. For the CBS pouch, the pH is stable after +/- 6h.

Effect of the extraction time on TDS content in the coffee beverage of the invention is shown in **Fig. 2****.**

The extraction% of the loose coffee reaches sooner a higher value in comparison with the CBS pouch, for example after 4h extraction time, the loose coffee is 18% extracted while the CBS pouch only 15.5%. But after 6h they both reach the same extraction% (18.5%) and from then on the trend is similar, with a maximum extraction% reached around 8-10h extraction time for both products: 19.5 a 20% extraction. For the CBS pouch, between 0 and 6h extraction time, there is a limiting effect on the extraction rate by the water that needs to enter the pouch and completely wet the coffee that is inside.

### Example 5: Effect of stirring on pH value and extraction efficacy

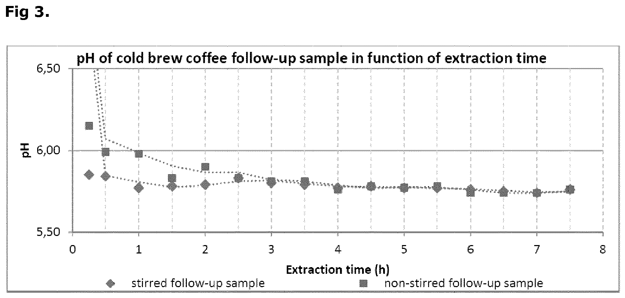

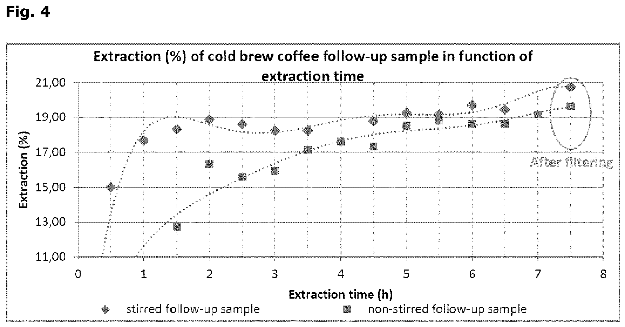

Results are shown in **Fig. 3** and **4****.**

Effect of stirring on pH value of coffee beverage is shown in **Fig. 3** pH is stable after 1h for the stirred sample, while after 4h for the non-stirred sample.

Effect of stirring on the extraction process is shown in **Fig. 4** extraction% of the stirred sample is always higher than for the non-stirred sample (during the tested period of 7.5h). The stirred sample already has 19% extraction after 2h and reaches 20% extraction after 6h. Probably this is the most efficient extraction time. At 7.5h the extraction% is higher, but this is measured on the filtered sample thus the measurement method can have an influence here.

The non-stirred sample reaches 19% extraction only after 5.5h and continues to slightly increase. 20% extraction is not yet reached in this test period of 7.5h, so most probably the most efficient extraction time is higher than 7.5h. This is proved by the first test (CBS pouch versus loose coffee) where 8-10h extraction was concluded to be most efficient.

### Example 6: Caffeine content in cold brewed coffee beverage

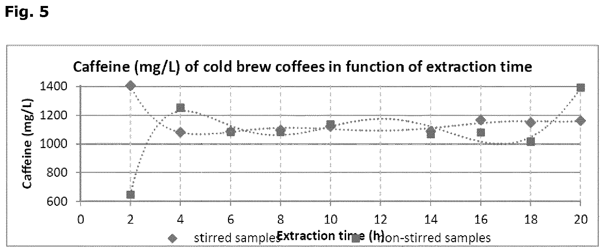

Caffeine content in cold brewed coffee beverages of the invention are shown in **Fig. 5****.**

The caffeine concentration was measured as well for all samples. After 2h, there is a lot of caffeine extracted from the stirred sample, while the caffeine concentration of the non-stirred sample is still very low. After 4h, the non-stirred sample reaches a high caffeine value as well. This shows that the caffeine is related with the extraction% (stirred samples already high extraction% at 2h while non-stirred samples from 4h on), but the caffeine seems to reach sooner an equilibrium than the other solubles. The extraction% continues to slightly increase after 2h (for stirred) and 4h (for non-stirred), while this is not the case for the caffeine content.

### Example 7: UHT Treatment

The coffee beverages obtained by a pouch and direct immersion technique were is subjected to ultra-high temperature treatment. This step includes passing the clarified coffee extract via tubular indirect heat exchangers where a temperature of 150 °C is maintained. The each extract was exposed to this high temperature for less than 40 seconds or preferably for less than 10 seconds. Although exposure to heat lowers the pH levels of the extract as expected, the drop in the pH levels is measured to be only between about 0.1 to about 0.3. This is considered a minimal drop in the pH levels because the pH of the coffee extract was still above 5.5. The beverage also has desirable flavor profiles (i.e., less acidic, more smoothness and aroma) after the buffer and thermal treatments.

The final coffee concentrate or product is then filled aseptically in containers such as HDPE bottles. The coffee concentrate remained shelf-stable and smooth with rich coffee flavors for more than 4 months.

### Example 8: Evaluation of pH changes of coffee beverage over time

The coffee beverages prepared according to the above procedure is then tested for pH changes over a 10-week period at different storage temperatures. For this test the following three samples of the concentrate is used:
(i) beverages were maintained at 4° C. ("refrigerated"),
(ii) beverages were maintained at room temperature ("ambient") and
(iii) beverages were maintained at 32° C. ("accelerated").

The pH changes of the above three groups is measured every week for a period of ten weeks. The data the pH levels of both (pouch and direct immersion) of the "refrigerated" sample is less acidic compared to the "ambient" and "accelerated" concentrates over a period of about 10 weeks suggesting that the cold brewed coffee beverage prepared according to the process described above yields less acidic product that can have extended shelf life when stored at cold temperature.

It is supposed that the present invention is not restricted to any form of realization described previously and that some modifications can be added to the presented example of fabrication without reappraisal of the appended claims. For example, the present invention has been described referring to use of the filtered tap water, but it is clear that the invention can be applied to any purified water for instance or to mixture of water with other consumable liquids such as milk, milk substitute or any derivative thereof.

## Claims

1. Process for cold brewing of coffee comprising the steps of:
(i) providing of a quantity of coffee bean material of a certain temperature range and grinding said coffee material to certain particle size, optionally in conjunction with a solvent;
(ii) infusing of said quantity of roasted ground coffee bean material to a quantity of a solvent in a vessel for a first duration of time to form a blend,
(iii) cold extraction step in said vessel for a second duration of time to form a beverage extract, whereby said extract is optionally agitated for a third duration of time;
(iv) separating of the extracted coffee bean material from the beverage extract to form a clarified coffee extract (ii);
(v) optional standardization of said clarified coffee extract by adding or removing the solvent;
(vi) preserving the clarified coffee extract by an antimicrobial treatment,
(vii) optional removing said clarified coffee extract from the vessel, and
**characterized in that** infusing (ii) and cold extraction step (iii) must take place at a temperature below 45 °C and the total dissolved coffee solids before concentration or adding soluble components to the clarified coffee extract (TDS%) of a dissolved coffee bean material to the solvent is higher than 0.14 wt.% and lower than 75 wt.%.

2. Process for cold brewing of coffee according to claim 1, wherein said step i) is performed with roasted ground coffee material of a temperature not less than 5°C and not more than 85°C, preferably about 20°C.

3. Process for cold brewing of coffee according to claim 1, wherein said step i) is performed by grinding roasted ground coffee material in conjunction with a solvent.

4. Process for cold brewing of coffee according to claims 1 to 3, wherein step ii) of infusing of said quantity of ground coffee material into the said quantity of a solvent is performed by immersing of said coffee bean material into the said quantity of solvent.

5. Process for cold brewing of coffee according to claim 4, wherein in cold extraction step iii) said quantity of solvent is caused into turbulent flow **characterized by** both a circular flow and a longitudinal flow, caused by a propeller operating at a rotational speed of at least 500 rpm, and/or caused by ultrasonic shockwaves.

6. Process for cold brewing of coffee according to claims 1 to 5, wherein step iii) is performed for a duration of time not shorter than 1 h and no longer than 24 h, preferably not shorter than 2 h and no longer than 20 h.

7. Process for cold brewing of coffee according to claims 1 to 6, wherein the cold extraction step iii) is performed at temperature of at least 0°C and at most 50°C, preferably at least 5 °C and at most 25 °C.

8. Process for cold brewing of coffee according to claims 1 to 7, wherein the said vessel in cold extraction step (iii) is a nitrogen blanketed vessel.

9. Process for cold brewing of coffee according to claims 1-8, wherein the solvent used is purified water optionally mixed with a consumable liquid other than water.

10. Process for cold brewing coffee according to claim 9, wherein said consumable liquid other than water is milk, or milk derived product.

11. Process for cold brewing coffee according to claims 1 to 10, wherein an cold brewed coffee beverage is with one or more processing aids is sterile packaged after thermal treatment, and has a pH that does not drop below 5.0 and is shelf-stable for a period of at least 6 months.

12. Cold brewed coffee beverage obtainable by the process according to claims 1 to 11, **characterized by** a total dissolved solids content of not less than 0.5 wt.%.

13. Cold brewed coffee beverage which has a pH that does not drop below 5.0 and is shelf-stable for a period of at least 6 months.

14. Cold brewed coffee beverage treated with one or more processing aids selected from the group comprising: addition of one or more agents to elevate pH, addition one or more sugars, addition of one or more enzymes to mitigate sediment formation, addition of one or more anti-foam materials, filtration to remove precipitates, ultra-high temperature treatment, shock freezing, carbonation of the beverage, or any combinations thereof.

15. Cold brewed coffee beverage according to claim 14, wherein said agents to elevate pH are milk and milk, milk alternative or any product derived thereof.
